(19) Europäisches Patentamt
European Patent Office
Office européen des brevets

(11) **EP 2 280 575 A1**

(12) **EUROPEAN PATENT APPLICATION**
published in accordance with Art. 153(4) EPC

(43) Date of publication:
**02.02.2011 Bulletin 2011/05**

(51) Int Cl.:
**H04W 52/40** (2009.01)   **H04W 52/10** (2009.01)

(21) Application number: **09750434.4**

(22) Date of filing: **07.04.2009**

(86) International application number:
**PCT/JP2009/057101**

(87) International publication number:
**WO 2009/142072 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **22.05.2008 JP 2008134218**

(71) Applicant: **NEC Corporation
Minato-ku
Tokyo 108-8001 (JP)**

(72) Inventor: **NIKI, Takeo
Tokyo 108-8001 (JP)**

(74) Representative: **Glawe, Delfs, Moll
Patent- und Rechtsanwälte
Postfach 26 01 62
80058 München (DE)**

(54) **RADIO COMMUNICATION SYSTEM, BASE STATION, TERMINAL, RADIO COMMUNICATION METHOD, AND PROGRAM**

(57)   A radio communication system includes a terminal and a base station that reports power information in the base station to the terminal. The terminal includes a prediction unit that, at the time of handover, predicts the timing at which power information is to be reported next based on the report period for reporting power information by the base station, and a switching unit that, at the time of handover, carries out switching to a handover target base station before the timing that was predicted.

FIG. 6

**Description**

Technical Field

The present invention relates to a technology for controlling the transmission power of uplink data that are transmitted to a base station from a terminal in a radio communication system.

Background Art

Orthogonal Frequency Division Multiple Access (OFDMA) is receiving attention in recent years as a multiple access method of a radio communication system.

OFDMA is a method of dividing each frequency direction by subcarriers and each time directions by time slots and allotting subcarriers and time slots in which the subcarriers can be used, to a data transmission origin. OFDMA has been adopted in, for example, WiMAX (Worldwide Interoperability for Microwave Access).

In the case of uplink (UL) in OFDMA, the transmission power and transmission timing in a terminal and the frequency assigned to the terminal are adjusted between the base station and the terminal. This adjustment is referred to as ranging (Patent Document 1). Ranging is carried out at the time of initial entry of a terminal to a base station (for example, entry to the base station that is the handover target during handover of a terminal) and is subsequently carried out periodically.

In the ranging of transmission power among such rangings, a terminal uses the information of the downlink path loss to calculate the uplink data transmission power on the assumption that the path loss in uplink and downlink (DL) are substantially the same. This type of transmission power control is referred to as open-loop power control, and the present invention presupposes the implementation of open-loop power control.

Details of open-loop power control in uplink are next described.

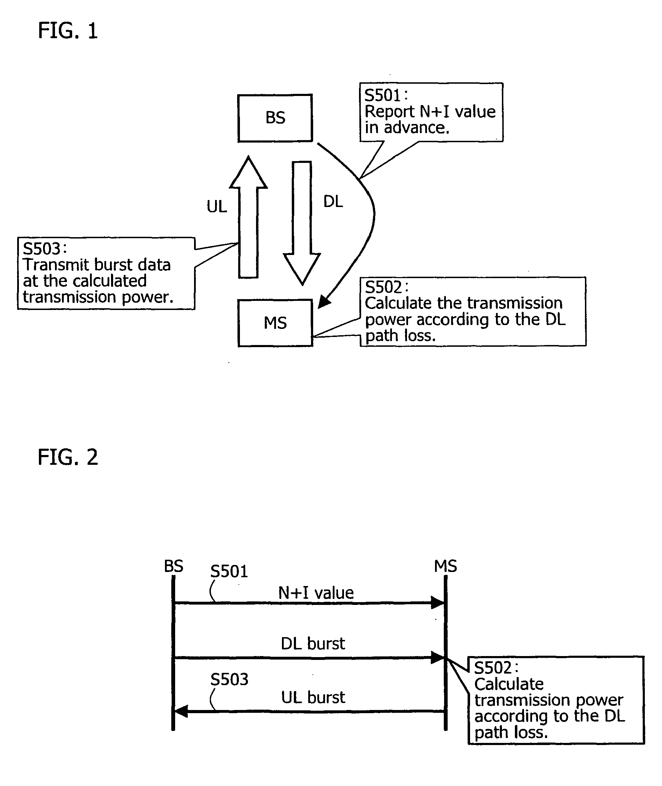

As shown in FIG. 1 and FIG. 2, base station BS in Step S501 reports to terminal MS not only the noise power and interference power (N+I values) in its own station, but also the transmission power of downlink data in its own station and information of the required CINR (Carrier to Interference plus Noise Ratio) value of the modulation in its own station.

In this case, the noise power is the power of the thermal noise produced in the interior of the receiver in its own station, and the interference power is the power of disturbance arising from sources other than within its own station (for example, interference waves and radiowaves from neighboring cells).

In Step S502, terminal MS next estimates the difference in path loss between downlink and uplink based on the difference between CINR of the downlink data (burst data) received from base station BS and the required CINR, and from this path loss difference, calculates the transmission power of uplink data. As a result, the method of calculating transmission power can be represented by the following Equation 1:

[Equation 1]

$$P(dBm) = L + C/N + NI - 10\log 10(R) + Offset\_MS_{perMS} + Offset\_BS_{perMS}$$

where L is the downlink path loss estimated in terminal MS, C/N is the required CINR value of the modulation method in base station BS, NI is noise power and interference power calculated in base station BS, 10 log 10 (R) is the correction value of repetition coding, Offset_MS$_{perMS}$ is the correction value for each terminal MS, and Offset_BS$_{perMS}$ is the correction value for each base station BS.

In Step S503, terminal MS then transmits to the base station BS uplink data (burst data) at the transmission power that was calculated as described above.

However, in open-loop power control in uplink, variations in the radio environment cause the noise power and interference power to differ for each base station BS, resulting in the problem in which terminal MS is unable to accurately calculate the initial transmission power at the time of handover.

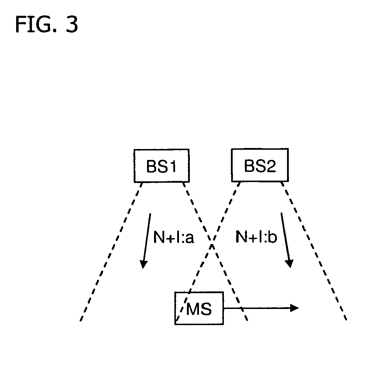

This problem is next described in detail. As shown in FIG. 3, it is here assumed that terminal MS is undergoing handover from base station BS1 to base station BS2. In addition, the N+I values that represent noise power and interference power at base stations BS1 and BS2 are further assumed to be "a" and "b", respectively.

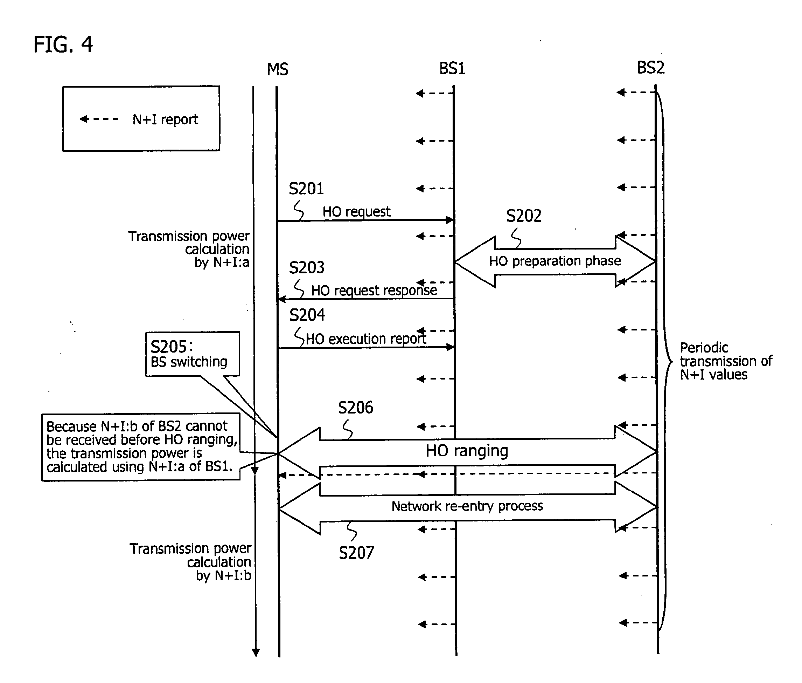

As shown in FIG. 4, base station BS1 carries out periodic transmission of periodically inserting the N+I value "a" into downlink frames and broadcast transmitting to terminal MS that is under its own jurisdiction.

Base station BS2 similarly carries out periodic transmission of periodically inserting N+I value "b" into downlink frames and sending by broadcast to terminal MS that is under its own jurisdiction.

In Step S201, terminal MS transmits to the base station BS1 that is providing service (Serving BS) a handover request message that takes base station BS2 as the handover target base station (Target BS).

In Step S202, a handover preparation phase is then executed between base station BS1 and base station BS2.

In the handover preparation phase, a process is carried out in base station BS1 of reporting to base station BS2 information of terminal MS that is undergoing handover, and in base station BS2, a process is carried out of generating a data path to terminal MS with higher-order network (in the case of WiMAX, the access service network).

Upon completion of the handover preparation phase, base station BS1 transmits to terminal MS a handover request response message in response to the handover request message in Step S203, and terminal MS transmits to base station BS1 a handover execution notification message in Step S204.

Terminal MS subsequently carries out switching from base station BS1 to base station BS2 in Step S205, and in Step S206, executes ranging with base station BS2. This ranging is specially referred to as handover ranging. [0021]

Subsequently, a network re-entry process is executed between terminal MS and base station BS2 in Step S207.

In the network re-entry process, a process is carried out in base station BS2 in which terminal MS re-enters the higher-order network (in the case of WiMAX, the access service network) by way of base station BS2.

However, in the interval from the implementation of switching to base station BS2 in Step S205 to the start of handover ranging in Step S206, terminal MS does not receive N+I value "b" from base station BS2 and does not know N+I value "b".

As a result, when calculating the initial transmission power of uplink data by means of Equation 1 in handover ranging, terminal MS is compelled to use N+I value "a" of base station BS1.

In this case, the initial transmission power diverges by the portion (a-b) from the transmission power that is calculated using N+I value "b" that is later received from base station BS2 in ranging that is subsequently carried out periodically. The initial transmission power that is calculated in handover ranging is consequently not calculated correctly.

Patent Document 1: JP 2006-005946 A

Summary of the Invention

It is an object of the present invention to provide a radio communication system, a terminal, a radio communication method, and a program that can solve the above-described problems.

The radio communication system of the present invention includes a terminal and a base station that reports power information in the base station to the terminal, wherein the terminal includes:

a prediction unit that, at the time of handover, predicts the next timing at which power information is to be reported based on the report period for reporting power information by the base station; and
a switch unit that, at the time of handover, carries out switching to the handover target base station before the timing that was predicted.

The terminal of the present invention is a terminal to which power information in a base station is reported from the base station and includes:

a prediction unit that, at the time of handover, predicts the next timing at which power information is to be reported based on the report period for reporting power information by the base station; and
a switch unit that, at the time of handover, switches to the handover target base station before the timing that was predicted.

The radio communication method of the present invention is realized by a terminal to which power information in a base station is reported from the base station, and includes:

a prediction step of, at the time of handover, predicting the next timing at which power information is to be reported based on the report period for reporting power information by the base station; and
a switching step of, at the time of handover, carrying out switching to the handover target base station before the timing that was predicted.

The program of the present invention causes a terminal to which power information in a base station is reported from the base station to execute:

a prediction procedure of, at the time of handover, predicting the next timing at which power information is to be reported based on the report period for reporting power information by the base station; and

a switching procedure of, at the time of handover, carrying out switching to the handover target base station before the timing that was predicted.

According to the present invention, at the time of handover, a terminal predicts the next timing that power information is to be reported based on the report period for reporting power information by the base station, and then, before the timing that was predicted, carries out switching to the handover target base station.

As a result, the terminal is able to carry out switching to the handover target base station before power information is next reported from the handover target base station, whereby the effect is obtained in which power information of the handover target base station can be used to accurately calculate initial transmission power.

Brief Description of the Drawings

FIG. 1 is a view for explaining open-loop power control in uplink;
FIG. 2 is a sequence chart for explaining open-loop power control in uplink;
FIG. 3 is a view for explaining an example of handover in a radio communication system;
FIG. 4 is a sequence chart for describing an example of operations during handover in a related radio communication system;
FIG. 5 shows the configuration of the radio communication system of an exemplary embodiment of the present invention;
FIG. 6 is a sequence chart for explaining an example of the operations at the time of handover in the radio communication system of an exemplary embodiment of the present invention;
FIG. 7 is a flow chart for explaining an example of the operations at the time of handover in a terminal of an exemplary embodiment of the present invention; and
FIG. 8 is a flow chart for explaining another example of the operations at the time of handover in a terminal of an exemplary embodiment of the present invention.

Best Mode for Carrying Out the Invention

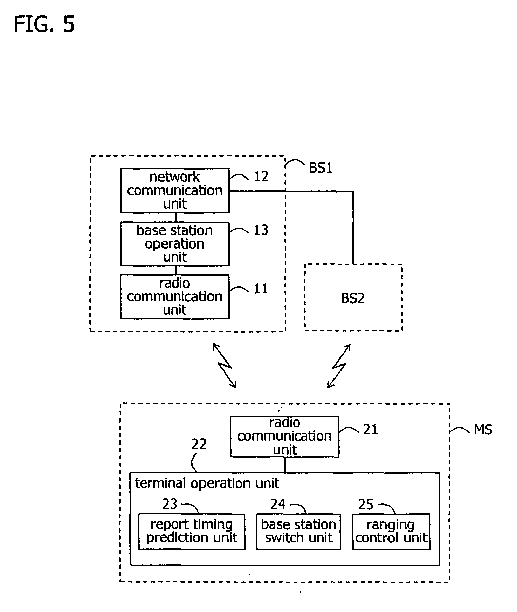

A best mode of carrying out the present invention is next described with reference to the accompanying figures.
Although an example is described in the following exemplary embodiment in which the radio communication system is a WiMAX radio communication system, the present invention is not limited to this form.
As shown in FIG. 5, the radio communication system of the present exemplary embodiment includes base stations BS1 and BS2 and terminal MS. In FIG. 5, in the interest of simplifying the explanation, the numbers of base stations BS and terminals MS are two and one, respectively, but the present invention is not limited to this form.
Base station BS1 includes radio communication unit 11, network communication unit 12, and base station operation unit 13. Although not shown in the figure, base station BS2 also has the same means as base station BS1.
Radio communication unit 11 carries out radio communication with terminal MS.
Network communication unit 12 carries out network communication with other base stations BS by way of a network.
Although not shown in the figure, base station operation unit 13 includes means equivalent to a base station that is typically used in a WiMAX radio communication system. For example, in FIG. 4, these are: means that periodically transmits to terminal MS information of the noise power and interference power in the base station, means that receives and transmits various messages with terminal MS, means that executes a handover preparation phase with other base stations BS, means that executes ranging with terminal MS, and means that executes a network re-entry process with a terminal MS. However, these means are not essential parts of the present invention and are well known in the art, and detailed explanation is therefore here omitted.
In the exemplary embodiment, it is assumed that base stations BS1 and BS2 periodically transmit in synchronization information of the noise power and interference power.
As shown in FIG. 5, terminal MS includes radio communication unit 21 and terminal operation unit 22.
Radio communication unit 21 carries out radio communication with base stations BS1 and BS2.
Terminal operation unit 22 includes report timing prediction unit 23, base station switch unit 24, and ranging control unit 25.
At the time of handover, report timing prediction unit 23 predicts the next timing at which noise power and interference power are to be reported from the handover target base station BS (for example, BS2) based on the report period for reporting noise power and interference power by the serving base station BS (for example, BS1).
At the time of handover, base station switch unit 24 carries out switching to the handover target base station BS before the timing that was predicted in report timing prediction unit 23.

Ranging control unit 25 controls the transmission power control unit (not shown) that executes open-loop power control in terminal operation unit 22.

Although not shown in the figure, terminal operation unit 22 includes means equivalent to a terminal that is typically used in a WiMAX radio communication system. For example, in addition to the above-described means, this is means for receiving and transmitting various messages with serving base station BS in FIG. 4. However, these means are not essential parts of the present invention and are further well known in the art, and detailed explanation is therefore here omitted.

The operations of the radio communication system of the present exemplary embodiment at the time of handover are next described. It will here be assumed that terminal MS undergoes handover from base station BS1 to base station BS2, as shown in FIG. 3. It is further assumed that the N+I values that represent the noise power and interference power are "a" and "b", respectively.

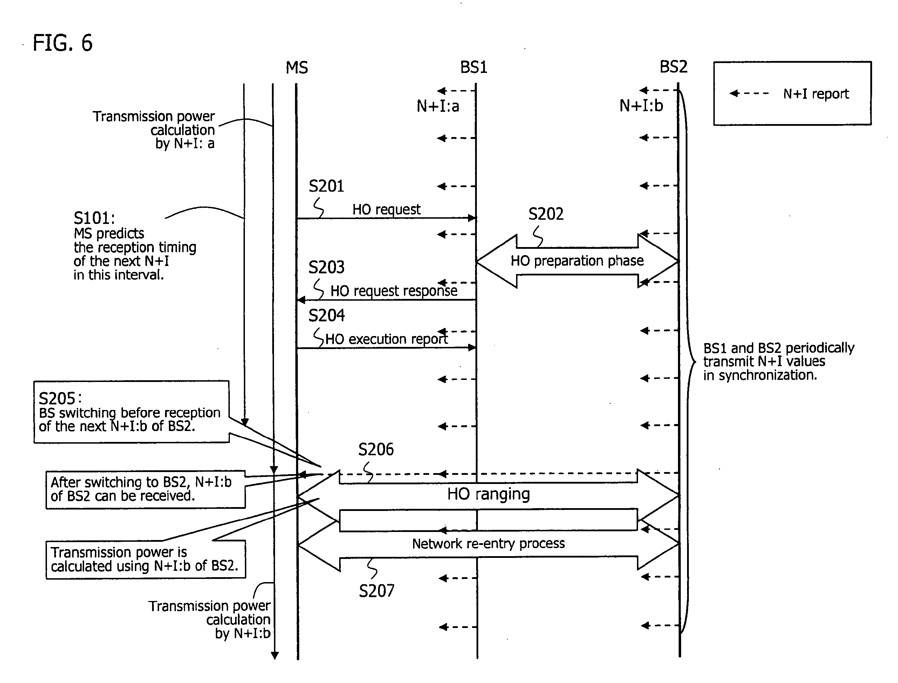

As shown in FIG. 6, base stations BS1 and BS2 execute periodic transmission of N+I values "a" and "b", respectively.

Terminal MS receives N+I value "a" from serving base station BS1 during the interval until switching to base station BS2 that is the handover target in subsequent Step S205.

As a result, report timing prediction unit 23 of terminal MS in Step S101 learns the report period of N+I value "a" by serving base station BS1.

Because it is assumed that base stations BS1 and BS2 execute periodic transmission of N+I values in synchronization in the present exemplary embodiment, the report period of N+I value "b" from handover target base station BS2 can be learned at the same time as the report period of N+I value "a" by base station BS1.

Report timing prediction unit 23 next predicts the next timing at which N+I value "b" is to be reported from base station BS2 based on the report period that was learned.

Base station switch unit 24 of terminal MS then, in Step S205, carries out switching to base station BS2 before the timing that was predicted in report timing prediction unit 23

In this way, terminal MS is able to receive N+I value "b" from base station BS2 after switching to base station BS2.

The operations of terminal MS at the time of handover are next described in detail.

(Operation Example 1)

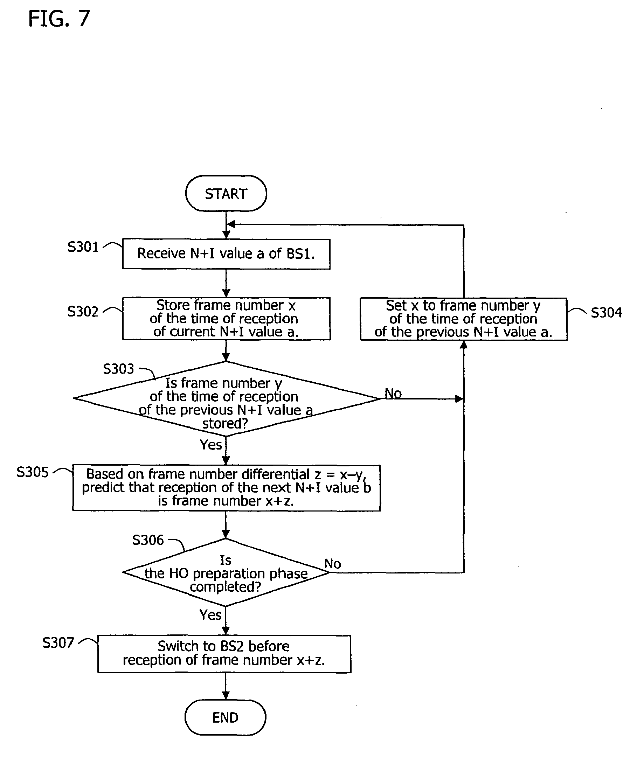

As shown in FIG. 7, upon receiving N+I value "a" from base station BS1 in Step S301, report timing prediction unit 23 in Step S302 stores frame number x of the downlink frame in which N+I value "a", that was received this time, was inserted.

In Step S303, report timing prediction unit 23 next determines whether or not frame number y of the downlink frame in which was inserted N+I value "a", that was previously received, is stored, and if not stored, in Step S304 sets frame number x to frame number y of N+I value "a" that was previously received and returns to the process of Step S301.

On the other hand, if in Step S303 frame number y is stored, report timing prediction unit 23 finds the frame number differential z (=x-y) in Step S305 and learns the value obtained by multiplying differential z by the report period of downlink frames as the report period of N+I values in base stations BS1 and BS2. Report timing prediction unit 23 further predicts the next timing at which N+I value "b" from handover target base station BS2 is to be received as the timing of receiving the downlink frame of frame number x+z.

In Step S306, base station switch unit 24 then determines whether or not the HO preparation phase has been completed, and if completed, in Step S307 carries out switching to base station BS2 before receiving the downlink frame of frame number x+z (for example, in the time interval from receiving the downlink frame of frame number x+z-1 up to reception of the downlink frame of frame number x+z).

(Operation Example 2)

This operation example is similar to Operation Example 1 of FIG. 7 with respect to the processing up to Steps S301-S306, but differs with respect to subsequent processing.

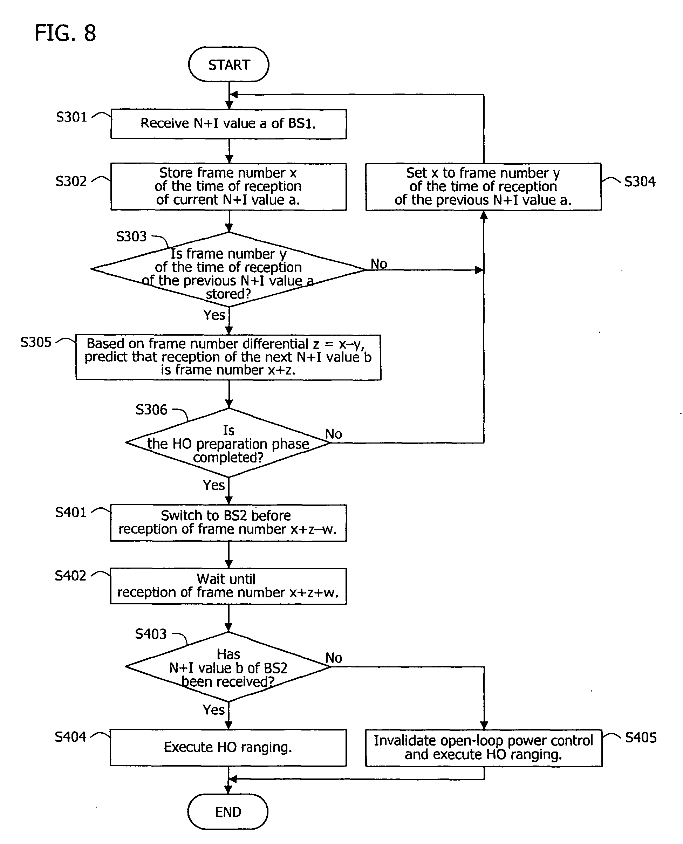

As shown in FIG. 8, base station switch unit 24 in Step S401, taking into consideration the possibility that N+I value "b" from base station BS2 will be transmitted earlier than the downlink frame of frame number x+z that was predicted, carries out switching to base station BS2 before receiving the downlink frame of frame number x+z-w (where w is a predetermined number) (for example, in the interval from the reception of the downlink frame of frame number x+z-w-1 up to the reception of the downlink frame of frame number x+z-w). Accordingly, switching to base station BS2 in this operating example is carried out w frames earlier than in the Operation Example 1 in FIG. 7.

In Step S402, ranging control unit 25 then, after waiting in standby until reception of the downlink frame of frame number x+z+w, determines in Step S403 whether N+I value "b" from base station BS2 has been received. Although the standby interval is set to a portion of 2w frames after switching to base station BS2, the present invention is not limited to this form.

If N+I value "b" has been received from base station BS2 in Step S403, ranging control unit 25 in Step S405 causes the transmission power control unit (not shown) of terminal operation unit 22 to execute handover ranging of the transmission power by open-loop power control. In this case, N+I value "b" from base station BS2 has been received and initial transmission power can therefore be correctly calculated.

In contrast, if N+I value "b" from base station BS2 has not been received in Step S403, ranging control unit 25 in Step S404 causes transmission power control unit in terminal operation unit 22 to execute handover ranging after invalidating open-loop power control. The invalidation of open-loop power control means that execution of open-loop power control is temporarily halted. In this case, the transmission power control unit controls the transmission power of uplink data based on instructions from base station BS2. This type of transmission power control is referred to as closed-loop power control. In this case, the occurrence of divergence is avoided between the initial transmission power and the transmission power that is calculated in ranging that is subsequently carried out periodically.

In the present exemplary embodiment as described hereinabove, terminal MS at the time of handover predicts the next timing at which noise power and interference power are to be reported based on the report period for reporting noise power and interference power by base stations BS and then carries out switching to the handover target base station BS before the timing that was predicted.

Terminal MS is therefore able to carry out switching to the handover target base station BS before noise power and interference power from the handover target base station BS are next reported, and can therefore use the information of the noise power and interference power of the handover target base station BS to correctly calculate the initial transmission power.

More specifically, terminal MS in the present exemplary embodiment predicts the frame number of the downlink frame, in which information of the noise power and interference power is inserted, and that is to be received next from base station BS and carries out switching to the handover target base station BS before receiving the downlink frame of the frame number that was predicted or of a frame number obtained by subtracting a predetermined number from that frame number.

Of these, carrying out switching before receiving the latter, i.e., the downlink frame of the frame number that is obtained by subtracting a predetermined number from the frame number that was predicted, enables coping with a case in which the information of the noise power and interference power from the handover target base station BS is transmitted earlier than predicted.

In the present exemplary embodiment, moreover, the execution of open-loop power control is temporarily halted when information of the noise power and interference power is not received from the handover target base station BS within a fixed interval after carrying out switching to the handover target base station BS. In this case, the occurrence of divergence can be avoided between the initial transmission power and the transmission power that is calculated in ranging that is subsequently carried out periodically.

The method carried out in terminal MS of the present invention may be applied to a program for realizing execution by a computer. This program can be stored in a memory medium, and can be provided to the outside by way of a network.

Although the present invention has been described with reference to an exemplary embodiment, the present invention is not limited to the above-described exemplary embodiment. The details and constitution of the present invention are open to various modifications within the scope of the present invention that will be clear to one of ordinary skill in the art.

The present application claims priority based on Japanese Patent Application No. 2008-134218 for which application was submitted on May 22, 2008 and incorporates all disclosures of that application.

**Claims**

1. A radio communication system that includes a terminal and a base station that reports power information in said base station to said terminal, wherein said terminal comprises:

   a prediction unit that, at the time of handover, predicts the next timing at which power information is to be reported based on a report period for reporting power information by said base station; and
   a switch unit that, at the time of handover, carries out switching to a handover target base station before said timing that was predicted.

2. The radio communication system as set forth in claim 1, wherein:

said base station periodically inserts power information in said base station into downlink frames and transmits to said terminal;

said prediction unit, at the time of handover, predicts the frame number of a downlink frame in which power information is inserted and that is to be received next from said base station; and

said switch unit, at the time of handover, carries out switching to a handover target base station before reception of the downlink frame of said frame number that was predicted.

3. The radio communication system as set forth in claim 1, wherein:

said base station periodically inserts power information in said base station into downlink frames and transmits to said terminal;

said prediction unit, at the time of handover, predicts the frame number of a downlink frame into which power information is inserted and that is to be received next from said base station; and

said switch unit, at the time of handover, carries out switching to the handover target base station before reception of the downlink frame of a frame number obtained by subtracting a predetermined number from said frame number that was predicted.

4. The radio communication system as set forth in claim 3, wherein said terminal further includes a ranging control unit that, when a downlink frame into which power information is inserted cannot be received despite the passage of a predetermined interval after switching to the handover target base station, temporarily halts execution of transmission power control of uplink data that is based on power information of the handover target base station.

5. The radio communication system as set forth in any one of claims 1 to 4, wherein said power information is information relating to noise power and interference power.

6. A terminal to which power information in a base station is reported from said base station, comprising:

a prediction unit that, at the time of handover, predicts the next timing at which power information is to be reported based on a report period for reporting power information by said base station; and

a switch unit that, at the time of handover, switches to a handover target base station before said timing that was predicted.

7. The terminal as set forth in claim 6, wherein:

power information in said base station is periodically inserted into downlink frames and transmitted from said base station;

said prediction unit, at the time of handover, predicts the frame number of the downlink frame into which power information is inserted and that is to be received next from said base station; and

said switch unit, at the time of handover, carries out switching to a handover target base station before reception of the downlink frame of said frame number that was predicted.

8. The terminal as set forth in claim 6, wherein:

power information in said base station is periodically inserted into downlink frames and transmitted from said base station;

said prediction unit, at the time of handover, predicts the frame number of the downlink into which power information is inserted and that is to be received next from said base station; and

said switch unit, at the time of handover, carries out switching to a handover target base station before reception of the downlink frame of a frame number obtained by subtracting a predetermined number from said frame number that was predicted.

9. The terminal as set forth in claim 8, further comprising a ranging control unit that, when a downlink frame into which power information is inserted cannot be received despite the passage of a predetermined interval after switching to the handover target base station, temporarily halts execution of transmission power control of uplink data based on power information of the handover target base station.

10. The terminal as set forth in any one of claims 6 to 9, wherein said power information is information relating to noise power and interference power.

11. A radio communication method that is realized by a terminal to which power information in a base station is reported from said base station, comprising:

a prediction step of, at the time of handover, predicting the next timing at which power information is to be reported based on a report period for reporting power information by said base station; and
a switching step of, at the time of handover, carrying out switching to a handover target base station before said timing that was predicted.

12. The radio communication method as set forth in claim 11, wherein:

power information in said base station is periodically inserted into downlink frames and transmitted from said base station;
in said prediction step, at the time of handover, the frame number of a downlink frame into which power information is inserted and that is to be received next from said base station is predicted; and
in said switching step, at the time of handover, switching is carried out to the handover target base station before reception of the downlink frame of said frame number that was predicted.

13. The radio communication method as set forth in claim 11, wherein:

power information in said base station is periodically inserted into downlink frames and transmitted from said base station;
in said prediction step, at the time of handover, the frame number of a downlink frame into which power information is inserted and that is to be received next from said base station is predicted; and
in said switching step, at the time of handover, switching is carried out to the handover target base station before reception of the downlink frame of a frame number obtained by subtracting a predetermined number from said frame number that was predicted.

14. The radio communication method as set forth in claim 13, further comprising a ranging control step of, when a downlink frame into which power information is inserted cannot be received despite passage of a predetermined interval after switching to the handover target base station, temporarily halting the execution of transmission power control of uplink data based on power information of the handover target base station.

15. The radio communication method as set forth in any one of claims 11 to 14, wherein said power information is information relating to noise power and interference power.

16. A program for causing a terminal to which power information in a base station is reported from said base station to execute:

a prediction procedure of, at the time of handover, predicting the next timing at which power information is to be reported based on a report period for reporting power information by said base station; and
a switching procedure of, at the time of handover, carrying out switching to a handover target base station before said timing that was predicted.

17. The program as set forth in claim 16, wherein:

power information in said base station is periodically inserted into downlink frames and transmitted from said base station;
in said prediction step, at the time of handover, the frame number of a downlink frame into which power information is inserted and that is to be received next from said base station is predicted; and
in said switching step, at the time of handover, switching is carried out to the handover target base station before reception of the downlink frame of said frame number that was predicted.

18. The program as set forth in claim 16, wherein:

power information in said base station is periodically inserted into downlink frames and transmitted from said base station;
in said prediction step, at the time of handover, the frame number of a downlink frame into which power information is inserted and that is to be received next from said base station is predicted; and

in said switching step, at the time of handover, switching is carried out to the handover target base station before reception of the downlink frame of a frame number obtained by subtracting a predetermined number from said frame number that was predicted.

19. The program as set forth in claim 18, wherein said terminal is further caused to execute a ranging control procedure of, when a downlink frame into which power information is inserted cannot be received despite passage of a predetermined interval after switching to the handover target base station, temporarily halting execution of transmission power control of uplink data based on power information of the handover target base station.

20. The program as set forth in any one of claims 16 to 19, wherein said power information is information relating to noise power or interference power.

FIG. 1

S501:
Report N+I value
in advance.

BS

UL          DL

S503:
Transmit burst data
at the calculated
transmission power.

MS

S502:
Calculate the transmission
power according to the DL
path loss.

FIG. 2

BS      S501                              MS

              N+I value

              DL burst

        S503                              S502:
              UL burst                    Calculate
                                          transmission power
                                          according to the DL
                                          path loss.

FIG. 3

## FIG. 4

EP 2 280 575 A1

MS                    BS1                    BS2

◄--- N+I report

S201                    ◄---                    ◄---
HO request

Transmission power
calculation
by N+I:a

S202
◄HO preparation phase►

S203
HO request response

S204
HO execution report

S205:
BS switching

Periodic
transmission of
N+I values

S206

Because N+I:b of BS2 cannot
be received before HO ranging,
the transmission power is
calculated using N+I:a of BS1.

HO ranging

Network re-entry process

Transmission power
calculation
by N+I:b

S207

**FIG. 5**

# FIG. 6

Transmission power calculation by N+I: a

S101:
MS predicts
the reception timing
of the next N+I
in this interval.

S201
HO request

S202

S203
HO request response

S204
HO execution report

HO preparation phase

N+I:a

N+I:b

N+I report

BS1 and BS2 periodically
transmit N+I values
in synchronization.

S205:
BS switching before reception
of the next N+I:b of BS2.

After switching to BS2, N+I:b
of BS2 can be received.

S206

HO ranging

Network re-entry process

Transmission power is
calculated using N+I:b of BS2.

S207

Transmission power
calculation
by N+I:b

MS                    BS1                    BS2

EP 2 280 575 A1

14

## FIG. 7

START

S301 — Receive N+I value a of BS1.

S302 — Store frame number x
of the time of reception
of current N+I value a.

S304 — Set x to frame number y
of the time of reception
of the previous N+I value a.

S303 — Is frame number y
of the time of reception
of the previous N+I value a
stored? — No

Yes

S305 — Based on frame number differential z = x−y,
predict that reception of the next N+I value b
is frame number x+z.

S306 — Is
the HO preparation phase
completed? — No

Yes

S307 — Switch to BS2 before
reception of frame number x+z.

END

## FIG. 8

```
                           ┌─────────┐
                           │  START  │
                           └─────────┘
                                │
  S301 ──┐    ┌──────────────────────────────┐
         └────│    Receive N+I value a of BS1.│
              └──────────────────────────────┘
                                │
  S302 ──┐  ┌─────────────────────┐     ┌─────────────────────────┐
         └──│  Store frame number x│     │  Set x to frame number y│──┐ S304
            │  of the time of      │     │  of the time of reception│
            │  reception of        │     │  of the previous N+I     │
            │  current N+I value a.│     │  value a.                │
            └─────────────────────┘     └─────────────────────────┘
                                │                      ▲
  S303 ──┐       ╱─────────────────────────╲          │
         └──────╱  Is frame number y         ╲    No   │
                ╲  of the time of reception   ╱─────────►
                 ╲ of the previous N+I value a╱
                  ╲       stored?            ╱
                      ╲─────────────────╱
                           │ Yes
  S305 ──┐  ┌───────────────────────────────────────────┐
         └──│ Based on frame number differential z = x–y,│
            │ predict that reception of the next N+I value b│
            │       is frame number x+z.                 │
            └───────────────────────────────────────────┘
                                │
  S306 ──┐          ╱────────────────────╲
         └─────────╱        Is            ╲   No
                   ╲ the HO preparation phase╱──────┐
                    ╲    completed?        ╱        │
                        ╲──────────────╱            │
                           │ Yes                    │
  S401 ──┐  ┌───────────────────────────┐           │
         └──│  Switch to BS2 before      │           │
            │  reception of frame number │           │
            │  x+z–w.                    │           │
            └───────────────────────────┘           │
                                │                    │
  S402 ──┐  ┌───────────────────────────┐           │
         └──│  Wait until                │           │
            │  reception of frame number │           │
            │  x+z+w.                    │           │
            └───────────────────────────┘           │
                                │                    │
  S403 ──┐          ╱────────────────────╲           │
         └─────────╱       Has            ╲    No     │
                   ╲ N+I value b of BS2    ╱──────────┤
                    ╲  been received?     ╱           │
                        ╲──────────────╱              │
                           │ Yes                      │
  S404 ──┐  ┌───────────────────┐   ┌──────────────────────────────┐
         └──│ Execute HO ranging.│   │ Invalidate open-loop power   │──┐ S405
            └───────────────────┘   │ control and execute HO ranging.│
                      │             └──────────────────────────────┘
                      │                         │
                      └────────────┬────────────┘
                              ┌─────────┐
                              │   END   │
                              └─────────┘
```

| INTERNATIONAL SEARCH REPORT | International application No. |
|---|---|
| | PCT/JP2009/057101 |

A. CLASSIFICATION OF SUBJECT MATTER
*H04W52/40(2009.01)i, H04W52/10(2009.01)i*

According to International Patent Classification (IPC) or to both national classification and IPC

B. FIELDS SEARCHED

Minimum documentation searched (classification system followed by classification symbols)
H04W52/40, H04W52/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-514108 A (LG Electronics Inc.), 01 May, 2008 (01.05.08), Full text & US 2006/0089161 A1 & US 2008/0056195 A1 & WO 2006/080676 A1 & KR 10-2006-0029587 A | 1-20 |
| A | WO 2006/107701 A2 (Interdigital Technology Corp.), 12 October, 2006 (12.10.06), Full text & JP 2008-535401 A & US 2006/0276189 A1 & EP 1867181 A & KR 10-2007-0121826 A & KR 10-2008-0002905 A | 1-20 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 May, 2009 (25.05.09) | 02 June, 2009 (02.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006005946 A

- JP 2008134218 A